Europäisches Patentamt

European Patent Office

Office européen des brevets

(11) Veröffentlichungsnummer: **0 363 752**
**A2**

(12) **EUROPÄISCHE PATENTANMELDUNG**

(21) Anmeldenummer: **89118048.1**

(22) Anmeldetag: **29.09.89**

(51) Int. Cl.⁵: **C08L 59/04 , //(C08L59/04, 61:28)**

(30) Priorität: **11.10.88 DE 3834547**

(43) Veröffentlichungstag der Anmeldung:
**18.04.90 Patentblatt 90/16**

(84) Benannte Vertragsstaaten:
**BE DE FR GB NL**

(71) Anmelder: **BASF Aktiengesellschaft
Carl-Bosch-Strasse 38
D-6700 Ludwigshafen(DE)**

(72) Erfinder: **Bohnet, Siegbert, Dr.
Collinistrasse 5
D-6800 Mannheim 1(DE)**
Erfinder: **Mc Kee, Grahem Edmund, Dr.
Kastanienweg 8
D-694/0 Weinheim(DE)**
Erfinder: **Gleich, Peter, Dr.
An der Froschlache 19
D-6700 Ludwigshafen(DE)**
Erfinder: **Goerrissen, Heiner, Dr.
Im Zinkig 112
D-6700 Ludwigshafen(DE)**
Erfinder: **Heinz, Gerhard, Dr.
Im Vogelsang 2
D-6719 Weisenheim(DE)**

(54) **Polyoxymethylen-Formmassen mit verbesserter thermischer Stabilität, Verfahren zu deren Herstellung und deren Verwendung.**

(57) Polyoxymethylen-Formmassen mit verbesserter thermischer Stabilität, enthaltend

A) 40 bis 99,8 Gew.% eines Polyoxymethylen-Homo- und/oder -Copolymerisates

B) 0,1 bis 5 Gew.% eines vernetzten und teilveretherten Melamin-Formaldehyd-Kondensates mit einer mittleren Teilchengröße von 0,1 bis 10 μm, erhältlich durch Kondensation in wäßriger Lösung von teilverethertem, methyloliertem Melamin mit einem Molverhältnis Melamin zu Formaldehyd von 1:1,0 bis 6 bei pH-Werten von 1 bis 5 und Temperaturen von 30 bis 100°C in Gegenwart eines Schutzkolloides sowie Sprühtrocknung der gebildeten Dispersion

C) 0,1 bis 5 Gew.% eines Stabilisators

D) 0 bis 50 Gew.% eines Verstärkungs- und/oder Füllstoffes.

EP 0 363 752 A2

## Polyoxymethylen-Formmassen mit verbesserter thermischer Stabilität, Verfahren zu deren Herstellung und deren Verwendung

Die vorliegende Erfindung betrifft Polyoxymethylen-Formmassen mit verbesserter thermischer Stabilität auf Basis eines Polyoxymethylen-homo- oder -copolymerisates, eines Melamin-Formaldehyd-Kondensates mit einer mittleren Teilchengröße von 0,1 bis 10 μm, eines Stabilisators sowie gegebenenfalls weiterer Verstärkungs- oder Füllstoffe, ein Verfahren zu deren Herstellung sowie deren Verwendung.

Polyoxymethylen-homo und/oder -copolymeriste sind seit langem bekannt. Die Polymerisate zeichnen sich durch eine Anzahl ausgezeichneter Eigenschaften aus, so daß sie für die verschiedensten technischen Anwendungen geeignet sind. Probleme bereiteten aber der Abbau des Polymeren bei erhöhter Temperatur. Neben vielen Stabilisatoren wurden hierfür auch schon Melamin-Formaldehyd-Kondensate eingesetzt.

So werden in der US-PS 4 139 575 Formmassen auf der Grundlage eines Polyoxymethylens beschrieben, das ein feinteiliges, vernetztes, wasserunlösliches Melamin-Formaldehyd-Fällungspolykondensat enthält. Obwohl diese Melamin-Formaldehyd-Fällungspolykondensate eine Verbesserung der thermischen Stabilität von Polyoxymethylen bewirken, können sie jedoch einen gewissen Molekulargewichtsabbau bei höheren Verarbeitungstemperaturen nicht unterbinden. Außerdem bewirken sie eine unruhige Oberfläche bei Spritzgußteilen.

In der US-PS 4 386 178 wird eine Polyacetal-Formmasse beschrieben, die ein teilverethertes Melamin-Formaldehyd-Kondensat enthält, mit einem mittleren Polymerisationsgrad von 1,2 bis 6,0. Diese Formmassen lassen sich bei hohen Temperaturen verarbeiten ohne einen Abbau des Molekulargewichts. Allerdings weisen sie den Nachteil auf, daß sie langsam kristallisieren, was sich durch ein schlechteres Entformungsverhalten beim Spritzguß bemerkbar macht.

Aufgabe der vorliegenden Erfindung war es, Polyoxymethylen-Formmassen zur Verfügung zu stellen, die eine erhöhte thermische Stabilität aufweisen und sich leicht entformen lassen. Bei Formmassen mit Verstärkungsstoffen sollte gleichzeitig die Haftung zum Verstärkungsstoff verbessert sein.

Diese Aufgabe konnte gelöst werden, durch Zusatz von speziellen teilveretherten und vernetzten Malamin-Formaldehyd-Kondensationsprodukten einer bestimmten Teilchengröße.

Gegenstand der vorliegenden Erfindung sind Polyoxymethylen-Formmassen mit verbesserter thermischer Stabilität, enthaltend

A) 40 bis 99,8 Gew.% eines Polyoxymethylen-homo- und/oder -copolymerisates

B) 0,1 bis 5 Gew.% eines vernetzten und teilveretherten Melamin-Formaldehyd-Kondensates mit einer mittleren Teilchengröße von 1 bis 10 μm, erhältlich durch Kondensation in wäßriger Lösung von teilverethertem, methyloliertem Melamin mit einem Molverhältnis Melamin zu Formaldehyd von 1:1,0 bis 6 bei pH-Werten von 1 bis 5 und Temperaturen von 30 bis 100° C in Gegenwart eines Schutzkolloides sowie Sprühtrocknung der gebildeten Dispersion

C) 0,1 bis 5 Gew.% eines Stabilisators

D) 0 bis 50 Gew.% eines Verstärkungs- und/oder Füllstoffes.

Weiterer Gegenstand der vorliegenden Erfindung ist ein Verfahren zur Herstellung der Formmassen sowie deren Verwendung.

Zu den Aufbaukomponenten ist folgendes auszuführen:

Geeignete Polyoxymethylene A) im Sinne der vorliegenden Erfindung sind Homopolymerisate des Formaldehyds oder Copolymerisate des Formaldehyds sowie des Trioxans mit cyclischen und/oder linearen Formalen wie 1,3-Dioxolan, 1,3-Dioxan, 1,3-Dioxacycloheptan oder mit linearen Oligo- oder Polyformalen, wie Polydioxolan oder Polybutandiformal oder mit Epoxiden wie Ethylen- oder Propylenoxid. Die Homopolymerisate haben in der Regel thermisch stabile Gruppen, wie Ester- oder Ethergruppen. Die Copolymerisate des Formaldehyds oder des Trioxans weisen vorteilhaft mehr als 50 %, insbesondere mehr als 75 % Oximethylengruppen auf. Besonders bewährt haben sie Copolymerisate, in denen mindestens 0,1 % Gruppen des Comonomeren enthalten sind, die mindestens zwei benachbarte Kohlenstoffatome in der Kette haben. Besondere technische Bedeutung haben Polyoxymethylene erlangt, die 1 bis 10 Gew.% Comonomere enthalten. Solche Copolymerisate sind in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Oligo- oder Polyformalen, wie Polydioxolan oder Polybutandiolformal erhältlich. In der Regel haben die verwendeten Polyoxymethylene ein Molekulargewicht (Zahlenmittel) $M_n$ von 2000 bis 100 000, vorzugsweise von 10 000 bis 100 000 und einen MFI bei 190° C, 21,17 N nach DIN 53 735 von 0,5 bis 200, vorzugsweise von 1 bis 50.

Besondere Bedeutung haben Polymerisate, die aus Trioxan und 1 bis 10 Mol.% Ethylenoxid, 1,3-Dioxolan oder Butandiolformal aufgebaut sind, erlangt. Als zusätzliche Comonomere für Trioxan werden

2

gegebenenfalls noch Verbindungen mit mehreren polymerisierbaren Gruppen im Molekül, z.B. Alkylglycidylformale, Polyglykolglycidylether, Alkandioldiglycidylether oder Bis-(alkantriol)triformale verwendet, und zwar in einer Menge von 0,05 bis 5 Gew.%, vorzugsweise 0,1 bis 2 Gew.%, bezogen auf die Gesamtmonomere. Die Komponente A) wird in einer Menge von 40 bis 99,8 Gew.%, bevorzugt 70 bis 99,7 Gew.% verwendet.

Geeignete vernetzte teilveretherte Melamin-Formaldehyd-Kondensate B) weisen eine mittlere Teilchengröße von 0,1 bis 10 μm, bevorzugt 1 bis 5 μm auf. Zu ihrer Herstellung werden teilveretherte Melamin-Formaldehyd-Kondensate mit einem Molverhältnis Melamin : Formaldehyd von 1:1,0 bis 6, bevorzugt 1:3 bis 6 verwendet. Sie sind mit einem $C_1$- bis $C_4$-Alkanol, vorzugsweise Methanol, derart teilverethert, daß das Verhältnis Melamin zu Etherrest zwischen 1:1,5 und 1:5,0, bevorzugt zwischen 1:2 und 1:4 liegt.

Diese Melaminharze sind im allgemeinen wasserlöslich, sind aber auch ab einer Wasserverdünnbarkeit von 5 geeignet.

Zur Herstellung der wäßrigen Dispersionen werden wäßrige Lösungen dieser teilveretherten Melamin-Formaldehyd-Harze mit Schutzkolloiden versetzt und auf einen pH-Wert von 1 bis 5, bevorzugt 2 bis 4 eingestellt. Als Schutzkolloide kommen beispielsweise Polyvinylpyrrolidon, Polyvinylformamid, Cellulosederivate, sulfonsäuregruppenhaltige Homo- und Copolymere, Gummi arabicum, Copolymere aus Styrol und Maleinsäure, Ethylenoxide, Propylenoxid-Blockcopolymere, Stärkederivate, Copolymere aus Acrylsäure und Acrylamid, Copolymere aus Maleinsäureanhydrid und Ethylen, Copolymere aus Maleinsäureanhydrid und Methylvinylether und Alginsäuren in Betracht. Besonders bevorzugte Schutzkolloide sind Polyvinylpyrrolidon, Poly-2-acrylamido-2-methyl-propansulfonsäure und Copolymere von 2-Acrylamido-2-methyl-propansulfonsäure mit (Meth)acrylsäure, (Meth)acrylsäureestern, (Meth)acrylamiden, Hydroxyalkylacrylamiden, Vinylformamid und Vinylpyrrolidon. Die Schutzkolloide werden zweckmäßig in Mengen von 1 bis 100 %, vorzugsweise 10 bis 70 %, bezogen auf das Gewicht der teilveretherten, methylolierten Melamins eingesetzt.

Zur Einstellung des pH-Wertes werden organische und anorganische Säuren wie Ameisensäure, Essigsäure, p-Toluolsulfonsäure und Phosphorsäure verwendet. Grundsätzlich können sämtliche aus der Aminoplastchemie bekannten sauren Katalysatoren eingesetzt werden. Die Reaktionslösung wird unter Rühren etwa 1 bis 2 Stunden bei 30 bis 100°C gehalten, wobei sich eine feinteilige Dispersion von vernetzten Harzteilchen bildet. Die Teilchengröße ist abhängig vom pH-Wert und nimmt mit fallendem pH-Wert ab. Unterhalb eines pH-Wertes von 5 liegen sie zwischen 0,1 bis 10 μm, bevorzugt 1 bis 5 μm, wobei eine sehr enge Verteilung vorliegt.

Die zunächst schwach sauer anfallenden Dispersionen können mit organischen oder anorganischen Basen, wie Ammoniak, Aminen oder Alkalilaugen neutral bis basisch eingestellt werden. Die Dispersionen können direkt in die Schmelze der Komponente A), C) und D) in einem Extruder eingearbeitet werden, wobei der Wasserdampf über eine Entgasungseinrichtung des Extruders abgeführt wird. Eine andere Möglichkeit ist das Sprühtrocknen der Dispersionen in Trockentürmen und Verwendung des sprühgetrockneten Pulvers. Die Komponente B wird in Mengen von 0,1 bis 5 Gew.% bevorzugt von 0,2 bis 0,5 Gew.%, bezogen auf Feststoff, verwendet.

Als geeignete Komponente C) werden an sich bekannte Stabilisatoren wie Wärme- oder Lichtstabilisatoren in Mengen von 0,01 bis 5 Gew.% bevorzugt 0,1 bis 3 Gew.% verwendet.

Als Stabilisatoren gegen den Einfluß von Wärme eignen sich insbesondere Polyamide, Amide mehrbasischer Carbonsäuren, Amidine, z.B. Dicyandiamid, Hydrazine, Harnstoffe, Poly-(N-vinyllactame) und Erdalkalisalze von aliphatischen, vorzugsweise hydroxylgruppenhaltigen, ein- bis dreibasischen Carbonsäuren mit 2 bis 20 Kohlenstoffatomen, z.B. Calciumstearat, Calciumrizinoleat, Calciumlactat und Calciumcitrat. Als Lichtstabilisatoren sind beispielsweise α-Hydroxybenzophenonderivate und Benzotriazolderivate geeignet.

An Verstärkungs- und/oder Füllstoffen D) können 0 bis 50 Gew.% mitverwendet werden. Bei der Mitverwendung haben sich 10 bis 30 Gew.% bewährt. Beispiele für Verstärkungsmittel sind Glasfasern, textile Flächengebilde aus Glasfasern, Glaskugeln, Wollastonit, Kohlefasern, Aramidfasern oder Ruß, insbesondere Leitfähigkeitsruß. Geeignete Füllstoffe sind beispielsweise Talkum, Calciumcarbonat (Kreide), Titandioxid, Kaliumoxid-Hexatitanat. Zur Herstellung der erfindungsgemäßen Polyoxymethylen-Formmassen mit verbesserter Thermostabilität können die Aufbaukomponenten A), B) und C) sowie gegebenenfalls D) einzeln oder in Form von einer oder mehreren vorgefertigten Mischungen einer geeigneten Mischvorrichtung zugeführt und dort zweckmäßigerweise bei erhöhten Temperaturen, beispielsweise von 150 bis 260°C gemischt werden. Nach dem zweckmäßigsten und daher vorzugsweise angewandten Herstellungsverfahren, werden das Polyoxymethylenhomo- und/oder -Copolymerisat A), das insbesondere auch in Form eines mit untergeordneten Mengen Trioxan und/oder anderen instabilen Addukten verunreinigten Materials eingesetzt werden kann, die Mischung der Komponenten B), C) und gegebenenfalls die Zusatzstoffe D) bei Temperaturen von 0 bis 150°C, vorzugsweise von 0 bis 50°C intensiv gemischt. Die Mischung wird in einen Extruder, vorzugsweise einen Doppelschneckenextruder, der gegebenenfalls mit einer Entgasungsvorrich-

3

tung ausgestattet ist, eingebracht, bei Temperaturen von 150 bis 260°C, vorzugsweise 200 bis 250°C aufgeschmolzen und entgast, die Schmelze extrudiert, abgekühlt und granuliert.

Bei einer anderen Verfahrensvariante wird die Komponente B) als wäßrige Dispersion in die Schmelze der Komponenten A), C) und D) eingetragen, wobei das Wasser, wie oben beschrieben, über eine Entgasungsvorrichtung abgezogen wird. Die erhaltenen Granulate können zwischengelagert oder direkt zur Herstellung von Folien oder vorzugsweise Formkörpern verwendet werden.

Die erfindungsgemäßen Polyoxymethylenformmassen besitzen neben guten mechanischen Eigenschaften eine deutlich verbesserte Temperaturbeständigkeit und geringere Verfärbungstendenz sowie einen verringerten Restformaldehydgehalt und eignen sich zur Herstellung von beispielsweise Folien oder vorzugsweise Formkörpern nach bekannten Techniken, wie Blasformen, Extrusion oder Spritzgießen, wobei sie gutes Kristallisationsvermögen zeigen. Zu Verstärkungsmitteln weisen sie eine gute Haftung auf. Die Formkörper finden Verwendung in beispielsweise Fahrzeug-, Elektrogeräte- und Elektronikindustrie.

## Beispiele

### Melamin-Formaldehyd-Harz-Dispersion 1

1020 g Wasser, 160 g einer 20 gew.%igen wäßrigen Lösung von Polyvinylpyrrolidon und 67,5 g einer 70 gew.%igen wäßrigen Lösung eines teilveretherten methylolierten Melamins mit einem Moleverhältnis Melamin zu Formaldehyd von 1:5,3 und einem Verhältnis Melamin zu Etherrest von 1:2,3 wurden innig vermischt. Anschließend wurde mit Ameisensäure auf einen pH-Wert von 3,8 eingestellt und die Temperatur auf 50°C erhöht. Die Lösung wurde 3 Stunden bei 50°C gerührt und weitere 2 Stunden bei 80°C gehalten. Nach dem Abkühlen wurde mit Triethanolamin neutralisiert. Der mittlere Teilchendurchmesser der Harzteilchen lag bei 2,79 $\mu$m (Coulter Counter).

### Dispersion 2

1020 g Wasser, 160 g einer 20 gew.%igen wäßrigen Lösung von Poly-(2-acrylamido-2-methylpropansulfonsäure) und 135 g einer 70 gew.%igen wäßrigen Lösung eines teilveretherten methylolierten Melamins des Beispiels 1 wurden wie unter Beispiel 1 beschrieben, umgesetzt. Bei einem pH-Wert von 4,5 (Phosphorsäure) wurden Teilchen mit einem mittleren Durchmesser von 2,83 $\mu$m erhalten.

### Dispersion 3

1270 g Wasser, 422 g einer 20 gew.%igen wäßrigen Lösung von Poly-(2-acrylamido-2-methylpropansulfonsäure) und 458 g einer 70 gew.%igen wäßrigen Lösung eines teilveretherten methylolierten Melamins des Beispiels 1 wurden innig vermischt und auf 60°C erhitzt. Anschließend wurde mit Ameisensäure der pH-Wert auf 3,6 eingestellt und 3 Stunden bei 60°C belassen. Um die Teilchen vollständig auszuhärten, wurde die Temperatur für zwei Stunden auf 80°C erhöht. Man erhielt einen mittleren Teilchendurchmesser der Harzteilchen von 2,16 $\mu$m.

### Herstellung der Polyoxymethylen-Formmassen

Ein Polyacetal-Rohpolymerisat aus 97,3 Gew.% Trioxan und 2,7 Gew.% Butandiolformal das noch ca. 2 bis 3 Gew.% nicht umgesetztes Trioxan und ca. 5 % instabile Anteile enthielt, wurde in einem Trockenmischer mit Antioxidans und wäßriger Melamin-Formaldehyd-Dispersion oder mit sprühgetrockneter Melamin-Formaldehyd-Dispersion sowie gegebenenfalls einem zusätzlichen Wärmestabilisator innig vermischt. Diese Mischung wurde anschließend auf einen Zweiwellen-Entgasungsextruder (ZSK-Extruder der Fa. Werner & Pfleiderer) bei 200 bis 240°C von den flüchtigen Anteilen befreit und granuliert. Von diesem Granulat wurde der Gewichtsverlust beim Erhitzen in Stickstoff und in Luftatmosphäre nach 2 Stunden bei 220°C bestimmt. Die erhaltenen Meßwerte sind in der nachfolgenden Tabelle zusammengestellt.

Tabelle

| Beispiele | MFK-Dispersion [1] | mittlere Teilchengröße [μm] | Gewichtsverlust (in Gew.%) nach 24 h bei 222° C | |
|---|---|---|---|---|
| | | | in Stickstoff | in Luftatmosphäre |
| 1 | 0,3 Gew.% Dispersion 1 | 2,8 | 0,09 | 3,38 |
| 2 | 0,3 Gew.% Dispersion 2 | 2,8 | 0,10 | 3,58 |
| 3 | 0,3 Gew.% Dispersion 3 | 2,2 | 0,10 | 3,14 |
| 4 | 0,3 Gew.% sprühgetrocknete MFK-Dispersion | 2,0 | 0,18 | 1,68 |
| 5 | 0,3 Gew.% gemahlenes MFK [2] | 5,0 | 0,38 | 4,16 |
| 6 | - (ohne MFK-Dispersion) | - | 0,32 | 4,39 |

[1] bezogen auf Feststoffgehalt
[2] Herstellung gemäß DE 25 40 207

## Ansprüche

1. Polyoxymethylen-Formmassen mit verbesserter thermischer Stabilität, enthaltend

A) 40 bis 99,8 Gew.% eines Polyoxymethylen-homo- und/oder -copolymerisates

B) 0,1 bis 5 Gew.% eines vernetzten und teilveretherten Melamin-Formaldehyd-Kondensates mit einer mittleren Teilchengröße von 0,1 bis 10 μm, erhältlich durch Kondensation in wäßriger Lösung von teilverethertem, methyloliertem Melamin mit einem Molverhältnis Melamin zu Formaldehyd von 1:1,0 bis 6 bei pH-Werten von 1 bis 5 und Temperaturen von 30 bis 100° C in Gegenwart eines Schutzkolloides sowie Sprühtrocknung der gebildeten Dispersion

C) 0,1 bis 5 Gew.% eines Stabilisators

D) 0 bis 50 Gew.% eines Verstärkungs- und/oder Füllstoffes.

2. Polyoxymethylen-Formmassen nach Anspruch 1, enthaltend ein Melamin-Formaldehyd-Kondensat mit einer mittleren Teilchengröße von 1 bis 5 als Komponente B).

3. Polyoxymethylen-Formmassen nach Anspruch 1 oder 2, enthaltend ein Melamin-Formaldehyd-Kondensat mit einem Molverhältnis Melamin zu Formaldehyd von 1:3 bis 6 als Komponente B).

4. Polyoxymethylen-Formmassen nach einem der Ansprüche 1 bis 3, enthaltend ein Melamin-Formaldehyd-Kondensat als Komponente B), dessen Methylolgruppen derart mit $C_1$- bis $C_4$-Alkanolen verethert sind, daß das Verhältnis Melamin zu Etherrest zwischen 1:1,5 und 1:5 liegt.

5. Polyoxymethylen-Formmassen nach einem der Ansprüche 1 bis 4, enthaltend ein Melamin-Formaldehyd-Kondensat, dessen Methylolgruppen teilweise mit Methanol verethert sind, als Komponente B).

6. Polyoxymethylen-Formmassen nach einem der Ansprüche 1 bis 5, enthaltend 5 bis 50 Gew.% Wollastonit, Kreide, Talkum, Glasfasern, textile Flächengebilde aus Glasfasern, Glaskugeln, Kohlefasern, Aramidfasern oder Ruß, insbesondere Leitfähigkeitsruß als Verstärkungs- und/oder Füllstoff D).

7. Verfahren zur Herstellung einer Polyoxymethylen-Formmasse gemäß einem der Ansprüche 1 bis 6, dadurch gekennzeichnet, daß man die Aufbaukomponenten A), B), C) und gegebenenfalls D) in einem Extruder bei 150 bis 260° C aufschmilzt, die Schmelze extrudiert und anschließend granuliert.

8. Verfahren zur Herstellung einer Polyoxymethylen-Formmasse gemäß einem der Ansprüche 1 bis 6, dadurch gekennzeichnet, daß man die Aufbaukomponenten A), C) und gegebenenfalls D) in einem Extruder bei 150 bis 260° C aufschmilzt, die Komponente B) als wäßrige Dispersion in die Schmelze einträgt, das verdampfende Wasser über eine Entgasungsvorrichtung aus der Schmelze abzieht, die Schmelze extrudiert und anschließend granuliert.

9. Verwendung der Polyoxymethylen-Formmassen gemäß einem der Ansprüche 1 bis 6 zur Herstellung von Folien oder Formkörpern.